# EUROPÄISCHE PATENTSCHRIFT

(11) **EP 3 769 062 B1**
(45) Veröffentlichungstag und Bekanntmachung des Hinweises auf die Patenterteilung: **07.02.2024**
(21) Anmeldenummer: 19713395.2
(22) Anmeldetag: 19.03.2019
(51) Int. Cl.: G01L 9/00, G01L 19/00, G01K 7/16

(54) **SENSORELEMENT ZUR DRUCK- UND TEMPERATURMESSUNG**
SENSOR ELEMENT FOR MEASURING PRESSURE AND TEMPERATURE
ÉLÉMENT SENSIBLE POUR MESURER LA PRESSION ET LA TEMPÉRATURE

(30) Priorität: 20.03.2018 DE 102018106518
(43) Veröffentlichungstag der Anmeldung: 27.01.2021
(73) Patentinhaber: TDK Electronics AG, 81671 München (DE)
(72) Erfinder: TANJAYA, Johnsen, 14167 Berlin (DE); SCHREIBER-PRILLWITZ, Wolfgang, 58730 Fröndenberg (DE)
(74) Vertreter: Epping - Hermann - Fischer
(86) Internationale Anmeldenummer: PCT/EP2019/056837
(87) Internationale Veröffentlichungsnummer: WO 2019/180018

(56) Entgegenhaltungen:
- EP-A2- 2 554 964
- DE-B3-102013 011 157

## Beschreibung

Die Erfindung betrifft ein Sensorelement zur Druck- und Temperaturmessung.

Sensoren zur Druckmessung, die auf einer Dünnfilm-Technologie basieren, umfassen einen Grundkörper mit einem dünnen Bereich, der als eine Membran ausgebildet ist. In Abhängigkeit von dem Referenzdruck, beispielsweise einem Druck der Umgebungsatmosphäre, der auf der Oberseite der Membran einwirkt, und einem zu messenden Druck, der auf der Unterseite der Membran wirkt, tritt eine Verformung der Membran auf. Die Verformung der Membran kann elektrisch erfasst werden. Bei einem resistiven Drucksensor ist auf der Membran eine Sensorschicht angeordnet, die einen elektrischen Widerstand aufweist, der sich in Abhängigkeit von einer Verformung der Membran verändert.

In vielen Anwendungsbereichen wird neben der Druckinformation auch eine Temperaturinformation über die in der Umgebung des Sensors herrschende Temperatur benötigt. Eine Druck- und Temperaturinformation ist in vielen Anwendungsfällen, beispielsweise zur Steuerung und/oder Regelung eines Systems, notwendig.

EP 2 554 964 A2 zeigt eine Druck- und Temperaturmessvorrichtung zur Messung eines Fluiddrucks und zur Messung einer Temperatur des Fluids. DE 10 2013 011157 B3 offenbart ein Sensorelement zur Druckmessung, bei dem druckabhängige Widerstände aus einer auf eine Membran aufgebrachte Sensorschicht ausgebildet werden.

Ein Anliegen der vorliegenden Erfindung ist es, ein Sensorelement zur Druck- und Temperaturmessung anzugeben, bei dem das Sensorelement eine Funktion zur Druck- und auch zur Temperaturmessung hat und die Druck- und Temperaturmessung auf platzsparende Weise und mit geringem fertigungstechnischen Aufwand in das Sensorelement integriert werden kann.

Ausführungsformen der durch die Ansprüche 1 und 9 definierten, auf ein Sensorelement zur Druck- und Temperaturmessung beziehungsweise seiner Herstellung gerichteten Erfindung, bei dem die Funktion der Druckmessung als auch die Funktion der Temperaturmessung auf herstellungstechnisch einfache Weise in das Sensorelement integriert werden kann, sind in den abhängigen Ansprüchen angegeben.

Das Sensorelement zur Druck- und Temperaturmessung umfasst einen Grundkörper mit einer Membran und einer um die Membran angeordneten Randzone. Des Weiteren umfasst das Sensorelement eine elektrisch leitfähige Schicht, die einen ersten Bereich, der über der Membran des Grundkörpers angeordnet ist, aufweist. Die elektrisch leitfähige Schicht umfasst darüber hinaus einen zweiten Bereich, der über der Randzone des Grundkörpers angeordnet ist. Die Membran ist als eine druckempfindliche Zone des Grundkörpers derart ausgebildet, dass die Membran in Abhängigkeit von einem Druckunterschied zwischen der Oberseite und der Unterseite der Membran eine Verformung annimmt. Die Randzone hingegen ist als eine druckunempfindliche Zone des Grundkörpers ausgebildet. Die elektrisch leitfähige Schicht ist in dem zweiten Bereich, das heißt über der Randzone des Grundkörpers, derart strukturiert, dass in dem zweiten Bereich der elektrisch leitfähigen Schicht mindestens ein temperaturabhängiger Widerstand ausgebildet ist.

In dem ersten Bereich der elektrisch leitfähigen Schicht ist mindestens ein druckabhängiger Widerstand angeordnet. Da der temperaturabhängige Widerstand in dem zweiten Bereich der elektrisch leitfähigen Schicht, das heißt in der druckunempfindlichen Randzone außerhalb der Membran, angeordnet ist, ist das gleiche elektrisch leitfähige Material, das zur Ausbildung des mindestens einen druckabhängigen Widerstands in dem ersten Bereich der elektrisch leitfähigen Schicht vorgesehen ist, auch in dem zweiten Bereich vorhanden. Zur Ausbildung der elektrisch leitfähigen Schicht wird in dem ersten Bereich und in dem zweiten Bereich der elektrisch leitfähigen Schicht das gleiche Material verwendet.

Da die elektrisch leitfähige Schicht in dem ersten Bereich über der Membran und in dem zweiten Bereich über der Randzone aus dem gleichen Material ausgebildet ist, kann zur Strukturierung des mindestens eine temperaturabhängige Widerstands und des mindestens einen druckabhängigen Widerstands ein einziges Strukturierungsverfahren verwendet werden. Die Strukturierung der elektrisch leitfähigen Schicht zur Herstellung des mindestens einen temperaturabhängige Widerstands und des mindestens einen druckabhängigen Widerstands kann in einem Arbeitsschritt mit demselben Strukturierungsverfahren erfolgen. Das Strukturieren der elektrisch leitfähigen Schicht in dem ersten Bereich zur Herstellung des mindestens einen druckabhängigen Widerstands und das Strukturieren der elektrisch leitfähigen Schicht in dem zweiten Bereich zur Herstellung des mindestens einen temperaturabhängigen Widerstands können beispielsweise durch Laserschneiden erfolgen. Da zur Herstellung des mindestens einen druckabhängigen Widerstands und des mindestens einen temperaturabhängigen Widerstands dasselbe Strukturierungsverfahren verwendet werden kann, lässt sich das Sensorelement mit der Druck- und Temperaturmessung auf fertigungstechnisch einfache und damit kostengünstige Weise herstellen.

Zur Ausbildung des mindestens einen temperaturabhängigen Widerstands wird der zweite Bereich der elektrisch leitfähigen Schicht derart strukturiert, dass in dem zweiten Bereich der elektrisch leitfähigen Schicht eine Leiterbahn ausgebildet wird. Darüber hinaus kann der zweite Bereich der elektrisch leitfähigen Schicht derart strukturiert werden, dass in dem zweiten Bereich der elektrisch leitfähigen Schicht Kontaktflächen zur Kontaktierung der Leiterbahn ausgebildet werden. Die Breite und/oder Länge der Leiterbahn bestimmt den Widerstandswert des temperaturabhängigen Widerstands bei einer bestimmten Temperatur.

Die Strukturierung der elektrisch leitfähigen Schicht kann in dem zweiten Bereich über der Randzone des Grundkörpers derart erfolgen, dass in dem zweiten Bereich der elektrisch leitfähigen Schicht mehrere temperaturabhängige Widerstände angeordnet werden. Diese Widerstände können derart strukturiert sein, dass sie bei gleicher Temperatur den gleichen beziehungsweise einen ähnlichen Widerstandswert oder verschiedene Widerstandswerte aufweisen.

Wenn die temperaturabhängigen Widerstände in dem zweiten Bereich der elektrisch leitfähigen Schicht bei der gleichen Temperatur den gleichen Widerstandswert aufweisen, kann die jeweilige Leiterbahn der Widerstände die gleiche Breite und/oder Länge haben. Die temperaturabhängigen Widerstände lassen sich beispielsweise mit unterschiedlichen Widerstandswerten bei der gleichen Temperatur herstellen, indem die Leiterbahn jedes Widerstands eine unterschiedliche Breite und/oder Länge aufweist. Je nach Anwendungsfall kann bei dieser Ausführungsform derjenige temperaturabhängige Widerstand der für einen Anwendungszweck am besten geeignet ist, verwendet werden, ohne dass dazu zusätzlicher Platz benötigt wird oder Beschränkungen in Bezug auf das Ausgeben des Widerstandswertes bestehen.

Die Erfindung wird im Folgenden anhand von Figuren, die Ausführungsbeispiele der vorliegenden Erfindung zeigen, näher erläutert.

Es zeigen:
Figur 1 eine Draufsicht und eine Queransicht eines Sensorelements zur Druckmessung mit druckabhängigen Widerständen,
Figur 2A eine Draufsicht auf eine erste Ausführungsform eines Sensorelements zur Druck- und Temperaturmessung mit druckabhängigen Widerständen und temperaturabhängigen Widerständen,
Figur 2B eine vergrößerte Darstellung eines Segments einer elektrisch leitfähigen Schicht eines Sensorelements zur Druck- und Temperaturmessung mit einem temperaturabhängigen Widerstand in der Randzone des Grundkörpers des Sensorelements,
Figur 3 eine Draufsicht auf eine dritte Ausführungsform eines Sensorelements zur Druck- und Temperaturmessung mit druckabhängigen Widerständen und temperaturabhängigen Widerständen mit unterschiedlichem Widerstandswert, und
Figur 4 eine Draufsicht auf ein Sensorelement zur Druckmessung mit druckabhängigen Widerständen zwischen Segmenten einer elektrisch leitfähigen Schicht des Sensorelements.

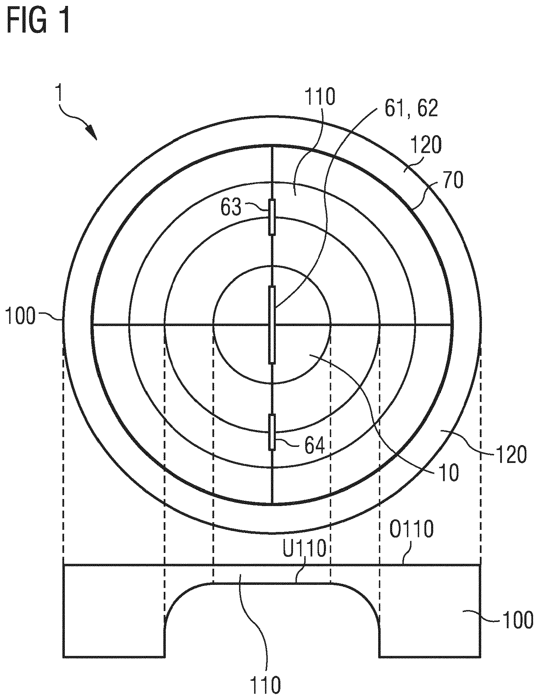

Figur 1 zeigt im oberen Bildbereich eine Draufsicht und im unteren Bildbereich einen Querschnitt eines Sensorelements 1 zur Druckmessung. Das Sensorelement umfasst einen Grundkörper 100 mit einer druckempfindlichen Membran 110 und einer druckunabhängigen Randzone 120, die um die Membran 110 angeordnet ist. Die Membran 110 ist von der druckunempfindlichen Randzone 120 des Grundkörpers 100 durch eine Isolationszone 70 getrennt. Über der Membran 110 ist eine elektrisch leitfähige Schicht 10 angeordnet. Die elektrisch leitfähige Schicht 10 ist als eine Sensorschicht ausgebildet, die beispielsweise piezoresistive Eigenschaften aufweist. Der Grundkörper 100 weist an einer Unterseite U110 der Membran einen Hohlraum auf. Das Medium mit dem zu messenden Druck wirkt auf die Unterseite U110 der Membran 110 ein. Ein Referenzdruck, beispielsweise der Druck der Umgebung, wirkt auf die Oberseite O110 der Membran ein.

Die Membran 110 ist als eine druckempfindliche Zone des Grundkörpers 100 ausgebildet. Die Membran 110 nimmt in Abhängigkeit von einem Druckunterschied zwischen der Oberseite O110 und der Unterseite U110 der Membran eine Verformung an. Aufgrund der Verformung der Membran 110 ändert sich der elektrische Widerstand der Sensorschicht 10. Durch Auswertung der verursachten Widerstandsänderung kann der Druck auf der Unterseite U110 der Membran in Abhängigkeit von dem Referenzdruck auf der Oberseite O110 der Membran 110 ermittelt werden. Durch Strukturierung der elektrisch leitfähigen Schicht 10 können in der elektrisch leitfähigen Schicht ein oder mehrere druckabhängige Widerstände 61, 62, 63 und 64 angeordnet sein.

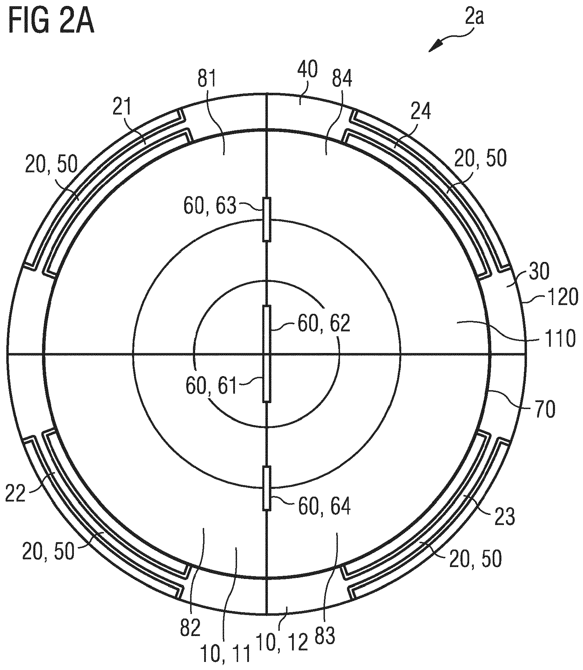

Figur 2A zeigt eine Draufsicht auf eine erste Ausführungsform eines Sensorelements 2a zur Druck- und Temperaturmessung, bei dem die Funktion der Druckmessung als auch die Funktion der Temperaturmessung in das Sensorelement integriert sind. Das Sensorelement umfasst einen Grundkörper 100 mit einer Membran 110 und einer um die Membran 110 angeordneten Randzone 120.

Des Weiteren umfasst das Sensorelement 1 eine elektrisch leitfähige Schicht 10, die als Sensorschicht zur Druck- und Temperaturmessung ausgebildet ist. Die elektrisch leitfähige Schicht 10 weist einen ersten Bereich 11, der über der Membran 110 des Grundkörpers 100 angeordnet ist, auf. Des Weiteren umfasst die elektrisch leitfähige Schicht 10 einen zweiten Bereich 12, der über der Randzone 120 des Grundkörpers 100 angeordnet ist.

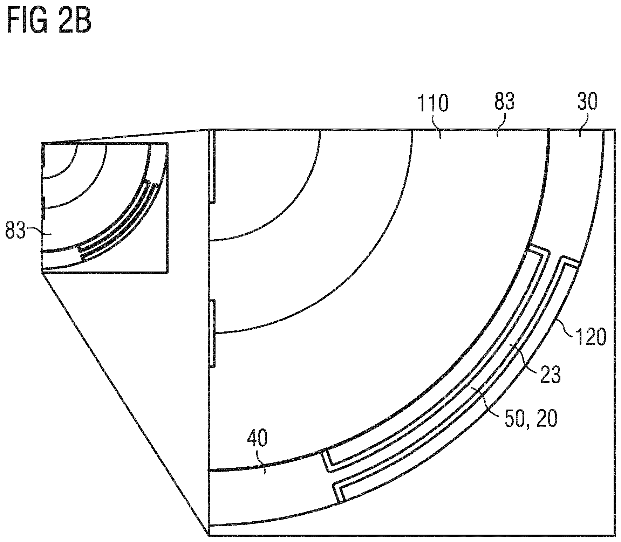

Der erste Bereich 11 der elektrisch leitfähigen Schicht 10 ist in mehrere Segmente 81, 82, 83, 84 unterteilt. Zwischen den einzelnen Segmenten ist die elektrisch leitfähige Schicht in dem Bereich 11 unterbrochen. Figur 2B zeigt das Sensorelement 2a mit einem vergrößerten Ausschnitt des Segments 83 der elektrisch leitfähigen Schicht 10.

Die Membran 110 ist als eine druckempfindliche Zone des Grundkörpers 100 ausgebildet. Wie bei der in Figur 1 gezeigten Ausführungsform des Sensorelements ist die Membran 110 bei dem Sensorelement 2a als ein dünner Bereich des Grundkörpers 100 ausgebildet. Die Membran 110 ist als eine druckempfindliche Zone des Grundkörpers derart ausgebildet, dass die Membran in Abhängigkeit von einem Druckunterschied zwischen der Oberseite und der Unterseite der Membran, die der Messzelle zugewandt ist, eine Verformung annimmt. Die Randzone 120 des Grundkörpers 100 ist als eine druckunempfindliche Zone des Grundkörpers ausgebildet. Im Bereich der Randzone 120 findet somit keine Verformung des Grundkörpers 100 statt.

Zur Realisierung einer Temperaturmessung ist die elektrisch leitfähige Schicht 10 in dem zweiten Bereich 12, das heißt in dem Bereich über der druckunempfindlichen Randzone des Grundkörpers 100, derart strukturiert, dass in dem zweiten Bereich 12 der elektrisch leitfähigen Schicht mindestens ein temperaturabhängiger Widerstand 20 ausgebildet ist.

Bei dem in den Figuren 2A und 2B gezeigten Sensorelement 2a ist die elektrisch leitfähige Schicht 10 in dem zweiten Bereich 12 derart strukturiert, dass in dem zweiten Bereich 12 der elektrisch leitfähigen Schicht 10 mehrere temperaturabhängige Widerstände 20 vorhanden sind. Insbesondere kann der zweite Bereich 12 der elektrisch leitfähigen Schicht 10 derart strukturiert sein, dass der zweite Bereich 12 einen ersten temperaturabhängigen Widerstand 21 und mindestens einen zweiten temperaturabhängigen Widerstand 22, 23, 24 umfasst. Bei der in Figur 2A gezeigten Ausführungsform des Sensorelements 2a umfasst das Sensorelement in dem zweiten Bereich 12 der elektrisch leitfähigen Schicht 10 die temperaturabhängigen Widerstände 21, 22, 23 und 24. Je nach Anwendungsfall kann einer oder mehrere der Widerstände zur Temperaturmessung verwendet beziehungsweise an eine elektrische Schaltung angeschlossen werden.

Jeder der Widerstände 21, 22, 23, 24 liegt in einem Abschnitt des Bereichs 12 der elektrisch leitfähigen Schicht der sich nach außen an eines der Segmente 81, 82, 83 und 84 des Bereichs 11 der elektrisch leitfähigen Schicht 10 anschließt. Die Segmente 81, 82, 83 und 84 sind durch die Isolationszone 70 von den verschiedenen Abschnitten des Bereichs 12 der elektrisch leitfähigen Schicht 10 getrennt. Die Segmente 81, 82, 83 und 84 als auch die jeweiligen Abschnitte des Bereichs 12 der elektrisch leitfähigen Schicht 10 sind beispielsweise als Viertelkreis-Segmente/-Abschnitte ausgeführt.

Die elektrisch leitfähige Schicht 10 ist in dem zweiten Bereich 12 derart strukturiert, dass die elektrisch leitfähige Schicht 10 in dem zweiten Bereich 12 mindestens eine erste Kontaktfläche 30 und mindestens eine zweite Kontaktfläche 40 zur externen Kontaktierung des mindestens einen temperaturabhängigen Widerstands 20 aufweist. Des Weiteren ist die elektrisch leitfähige Schicht 10 in dem zweiten Bereich 12 derart strukturiert, dass der mindestens eine temperaturabhängige Widerstand 20 als eine Leiterbahn 50 ausgebildet ist. Die jeweilige Leiterbahn 50 eines temperaturabhängigen Widerstands ist mit einer jeweiligen ersten Kontaktfläche 30 und einer jeweiligen zweiten Kontaktfläche 40 des temperaturabhängigen Widerstands verbunden. Insbesondere ist die jeweilige Leiterbahn 50 zwischen der jeweiligen ersten und zweiten Kontaktfläche 30, 40 angeordnet.

Die Breite der jeweiligen Leiterbahn 50 ist kleiner als die Breite der jeweils an sie angeschlossenen ersten und zweiten Kontaktfläche 30 und 40. Jede Leiterbahn 50 der temperaturabhängigen Widerstände 21, 22, 23 und 24 ist als ein schmaler Streifen der elektrisch leitfähigen Schicht 10 ausgebildet, der von den ihn umgebenden Flächenabschnitten der elektrisch leitfähigen Schicht durch eine Unterbrechung der elektrisch leitfähigen Schicht getrennt ist.

Bei der in den Figuren 2A und 2B gezeigten Ausführungsform des Sensorelements 2a weist der erste temperaturabhängige Widerstand 21 und der mindestens eine zweite temperaturabhängige Widerstand 22, 23, 24 bei gleicher Temperatur den gleichen Widerstandswert auf. Dazu kann die Breite und/oder Länge der jeweiligen Leiterbahn 50 der temperaturabhängigen Widerstände 21, 22, 23 und 24 gleich sein.

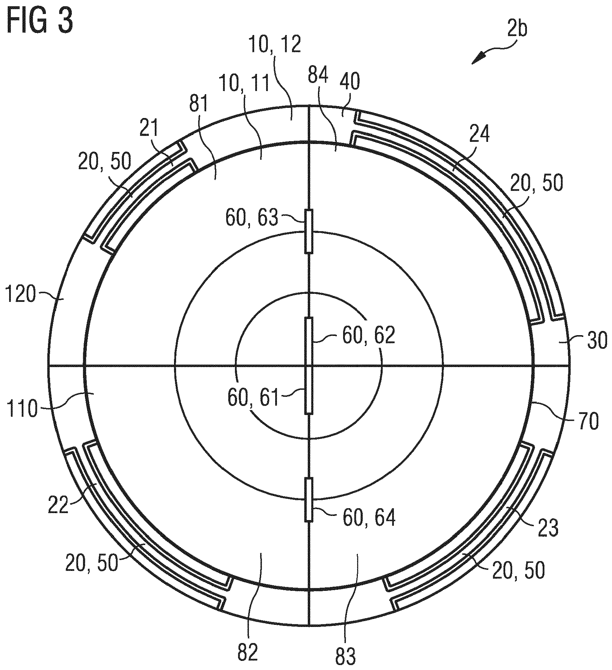

Figur 3 zeigt eine zweite Ausführungsform eines Sensorelements 2b zur Druck- und Temperaturmessung. Das Sensorelement 2b umfasst wie bei der in Figur 2A und 2B gezeigten Ausführungsform eine elektrisch leitfähige Schicht 10 mit einem ersten Bereich 11, der über der Membran 110 des Grundkörpers 100 angeordnet ist, und einen zweiten Bereich 12, der über der Randzone 120 des Grundkörpers 100 angeordnet ist. Die Membran 110 ist als eine druckempfindliche Zone des Grundkörpers ausgebildet, während die Randzone 120 des Grundkörpers 100 als eine druckunempfindliche Zone ausgebildet ist.

Wie bei der in Figur 2A gezeigten Ausführungsform ist die elektrisch leitfähige Schicht 10 in dem zweiten Bereich 12 derart strukturiert, dass in dem zweiten Bereich 12 der elektrisch leitfähigen Schicht mindestens ein temperaturabhängiger Widerstand 20 ausgebildet ist. Bei der in Figur 3 gezeigten Ausführungsform sind in dem zweiten Bereich 12 der elektrisch leitfähigen Schicht 10 die temperaturabhängigen Widerstände 21, 22, 23 und 24 ausgebildet. Die elektrisch leitfähige Schicht 10 ist in dem zweiten Bereich 12 derart strukturiert, dass die elektrisch leitfähige Schicht 10 in dem zweiten Bereich 12 mindestens eine erste Kontaktfläche 30 und mindestens eine zweite Kontaktfläche 40 zur externen Kontaktierung des mindestens einen temperaturabhängigen Widerstands 20 aufweist.

Die elektrisch leitfähige Schicht 10 ist in dem zweiten Bereich 12 derart strukturiert, dass die temperaturabhängigen Widerstände 21, 22, 23 und 24 jeweils als eine Leiterbahn 50 ausgebildet sind. Die jeweilige Leiterbahn 50 der temperaturabhängigen Widerstände ist jeweils zwischen einer der ersten Kontaktflächen 30 und einer der zweiten Kontaktfläche 40 angeordnet und mit einer jeweiligen ersten Kontaktfläche 30 und einer jeweiligen zweiten Kontaktfläche 40 verbunden.

Im Unterschied zu der in Figur 2A gezeigten Ausführungsform des Sensorelements 2a ist bei dem Sensorelement 2b die elektrisch leitfähige Schicht 10 in dem zweiten Bereich 12 derart strukturiert, dass die verschiedenen temperaturabhängigen Widerstände 21, 22, 23 und 24 bei gleicher Temperatur einen unterschiedlichen Widerstandswert aufweisen.

Dazu weisen die temperaturabhängigen Widerstände 21, 22, 23 und 24 eine unterschiedliche Breite und/oder Länge ihrer jeweiligen Leiterbahn 50 auf. Bei der in Figur 3 gezeigten Ausführungsform kann je nach Anwendungsfall einer der temperaturabhängigen Widerstände der zur Integration in eine elektrische Schaltung am besten geeignet ist, zur Temperaturmessung verwendet werden. Durch Anordnung der temperaturabhängigen Widerstände 21, 22, 23 und 24 in dem zweiten Bereich 12 der elektrisch leitfähigen Schicht 10, das heißt über dem druckunempfindlichen Randbereich 120 des Grundkörpers 100, kann somit eine Vielzahl von temperaturabhängigen Widerständen mit unterschiedlichem Widerstandswert bereitgestellt werden, ohne dass im Vergleich zu der in Figur 1 gezeigten Ausführungsform eines Sensorelements 1, das ausschließlich der Druckmessung dient, zusätzlicher Platz benötigt wird oder dass in Bezug auf das Auslesen der Widerstandswerte Beschränkungen bestehen.

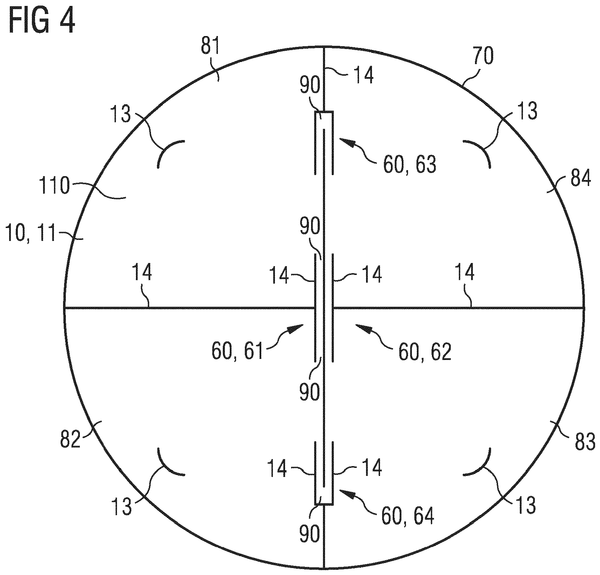

Figur 4 zeigt eine Draufsicht auf die Membran 110 beziehungsweise den ersten Bereich 11 der elektrisch leitfähigen Schicht 10 der Sensorelemente 2a und 2b. Die elektrisch leitfähige Schicht 10 ist in dem ersten Bereich 11 derart strukturiert, dass die elektrisch leitfähige Schicht in dem ersten Bereich 11 mindestens einen druckabhängigen Widerstand 60 aufweist. Insbesondere ist die elektrisch leitfähige Schicht 10 bei den Sensorelementen 2a und 2b derart strukturiert, dass die elektrisch leitfähige Schicht 10 in dem ersten Bereich 11 mehrere druckabhängige Widerstände 61, 62, 63 und 64 aufweist. Die elektrisch leitfähige Schicht 10 ist als eine Sensorschicht ausgebildet, die piezoresistive Eigenschaften aufweist. Bei einer Verformung der Membran 110 infolge einer Druckdifferenz zwischen der Ober- und Unterseite der Membran tritt bei den Widerständen 61, 62, 63 und 64 eine Widerstandsänderung auf.

Bei den in den Figuren 2A, 3 und 4 gezeigten Ausführungsformen des Sensorelements 2a, 2b weist die elektrisch leitfähige Schicht 10 in dem ersten Bereich 11 die druckabhängigen Widerstände 61, 62, 63 und 64 auf. Die Widerstände 61, 62, 63 und 64 bilden vorteilhafterweise eine Widerstandsbrücke, um eine Änderung des Widerstands der elektrisch leitfähigen Schicht 10 in dem ersten Bereich 11 aufgrund von Alterung oder schwankender Temperatur bei der Druckmessung auszugleichen.

Der erste Bereich 11 der elektrisch leitfähigen Schicht 10 ist in mehrere Segmente 81, 82, 83 und 84 unterteilt. Die Segmente der elektrisch leitfähigen Schicht 10 sind durch Unterbrechungen 14 in der elektrisch leitfähigen Schicht 10 voneinander isoliert. Jeweils zwei benachbarte Segmente sind durch einen der druckabhängigen Widerstände 61, 62, 63 und 64 elektrisch miteinander verbunden. Dabei ist die Fläche der Segmente 81, 82, 83 und 84 größer als die Fläche der druckabhängigen Widerstände 61, 62, 63 und 64. Die druckabhängigen Widerstände 61, 62, 63 und 64 sind jeweils als ein durch Unterbrechung des ersten Bereichs 11 der elektrisch leitfähigen Schicht 10 definierter Pfad 90 ausgebildet. Durch den Pfad 90 sind zwei benachbarte Segmente 81, 82 beziehungsweise 81, 84 und 82, 83 beziehungsweise 83, 84 elektrisch miteinander verbunden.

Elektrische Kontakte 13 zur Kontaktierung der druckabhängigen Widerstände 61, 62, 63 und 64 liegen in einem neutralen Bereich 140 der Membran 110. In dem neutralen Bereich 140 erfolgt bei einer Wölbung der Membran 110 keine Stauchung oder Streckung der Sensorschicht 10. Somit werden die elektrischen Kontakte zur Kontaktierung der druckabhängigen Widerstände nicht beschädigt.

Im Folgenden wird ein Verfahren zur Herstellung eines Sensorelements zur Druck- und Temperaturmessung angegeben. Zur Herstellung des Sensorelements 2a und 2b wird zunächst ein Grundkörper 100 mit einer Membran 110 und einer um die Membran 110 angeordneten Randzone 120 bereitgestellt. Der Grundköper 100 kann aus einem keramischen Material oder beispielsweise aus einem (rostfreien) Stahl hergestellt werden. Die Membran 110 ist als eine druckempfindliche Zone des Grundkörpers 100 derart ausgebildet, dass die Membran 110 in Abhängigkeit von einem Druckunterschied zwischen der Oberseite O110 und der Unterseite U110 der Membran eine Verformung annimmt. Die Randzone 120 ist als eine druckunempfindliche Zone des Grundkörpers 100 ausgebildet.

Die elektrisch leitfähige Schicht 10 wird mit dem ersten Bereich 11 über der Membran 110 des Grundkörpers 100 und mit dem zweiten Bereich 12 über der Randzone 120 des Grundkörpers 100 aufgebracht. Die elektrisch leitfähige Schicht 10 weist ein piezoresistives Material auf. Für die elektrisch leitfähige Schicht 10 können beispielsweise Kompositwerkstoffe, wie Nickel-Kohlenstoff, Kobalt-Kohlenstoff oder Palladium-Kohlenstoff, bei dem in amorphem Kohlenstoff gut leitende Metallpartikel aufgenommen sind, verwendet werden.

Wenn der Grundkörper 100 ein keramisches Material aufweist, kann die elektrisch leitfähige Schicht 10 unmittelbar auf dem keramischen Substrat des Grundkörpers 100 abgeschieden werden. Insbesondere wird zwischen dem keramischen Substrat des Grundkörpers 100 und der elektrisch leitfähigen Schicht 10 keine Isolationsschicht benötigt. Dadurch ist zur Herstellung des Sensorelements 2a und 2b nur ein verhältnismäßig geringer Aufwand an Prozessschritten notwendig.

Die elektrisch leitfähige Schicht 10 wird in dem zweiten Bereich 12 derart strukturiert, dass in dem zweiten Bereich 12 der elektrisch leitfähigen Schicht 10 mindestens ein temperaturabhängiger Widerstand 20 ausgebildet wird. Des Weiteren wird die elektrisch leitfähige Schicht 10 in dem zweiten Bereich 12 derart strukturiert, dass die elektrisch leitfähige Schicht 10 in dem zweiten Bereich 12 eine erste Kontaktfläche 30 und eine zweite Kontaktfläche 40 zur externen Kontaktierung des mindestens einen temperaturabhängigen Widerstands 20 aufweist. Darüber hinaus wird die elektrisch leitfähige Schicht 10 in dem zweiten Bereich 12 derart strukturiert, dass der mindestens eine temperaturabhängige Widerstand 20 als eine Leiterbahn, die mit der ersten und der zweiten Kontaktfläche 30 und 40 verbunden ist, ausgebildet ist.

Da der mindestens eine temperaturabhängige Widerstand in dem zweiten Bereich 12 der elektrisch leitfähigen Schicht 10, das heißt in der druckunempfindlichen Zone des Grundkörpers 100, ausgebildet ist, kann die elektrisch leitfähige Schicht 10 in dem ersten Bereich 11 mit dem mindestens einen druckabhängigen Widerstand 60 und in dem zweiten Bereich 12 mit dem mindestens einen temperaturabhängigen Widerstand 20 aus dem gleichen Material hergestellt werden. Da die elektrisch leitfähige Schicht 10 in dem ersten Bereich 11 und dem zweiten Bereich 12 das gleiche Material aufweist, kann die elektrisch leitfähige Schicht 10 in dem ersten und zweiten Bereich durch dasselbe Verfahren strukturiert werden. Zur Strukturierung kann zum Beispiel ein Laserschneideverfahren verwendet werden. Die Laserbearbeitung stellt im Vergleich zu einem fotolithographischen Verfahren ein herstellungstechnisch einfacheres und kostengünstigeres Prozessverfahren dar.

### Bezugszeichenliste

- 1: Sensorelement zur Druckmessung
- 2a, 2b: Sensorelement zur Druck- und Temperaturmessung
- 10: elektrisch leitfähige Schicht/Sensorschicht
- 11: erster Bereich der Sensorschicht
- 12: zweiter Bereich der Sensorschicht
- 13: elektrischer Kontakt
- 14: Unterbrechungen der Sensorschicht
- 20, 21, 22, 23, 24: temperaturabhängiger Widerstand
- 30: erste Kontaktfläche
- 40: zweite Kontaktfläche
- 50: Leiterbahn
- 60, 61, 62, 63, 64: druckabhängiger Widerstand
- 70: Isolationszone
- 81, 82, 83, 84: Segmente der elektrisch leitfähigen Schicht
- 90: elektrisch leitender Pfad
- 100: Grundkörper
- 110: Membran
- 120: Randzone
- 130: Messzelle
- 140: neutraler Bereich

## Patentansprüche

1. Sensorelement zur Druck- und Temperaturmessung, umfassend:
- einen Grundkörper (100) mit einer Membran (110) und einer um die Membran (110) angeordneten Randzone (120),
- eine elektrisch leitfähige Schicht (10), die einen ersten Bereich (11), der über der Membran (110) des Grundkörpers (100) angeordnet ist, und einen zweiten Bereich (12), der über der Randzone (120) des Grundkörpers (100) angeordnet ist, aufweist,
- wobei die Membran (110) als eine druckempfindliche Zone des Grundkörpers (100) derart ausgebildet ist, dass die Membran (110) in Abhängigkeit von einem Druckunterschied zwischen der Oberseite (O110) und der Unterseite (U110) der Membran (110) eine Verformung annimmt,
- wobei die Randzone (120) als eine druckunempfindliche Zone des Grundkörpers (100) ausgebildet ist,
- wobei die elektrisch leitfähige Schicht (10) in dem zweiten Bereich (12) derart strukturiert ist, dass in dem zweiten Bereich (12) der elektrisch leitfähigen Schicht mindestens ein temperaturabhängiger Widerstand (20) ausgebildet ist,
wobei die elektrisch leitfähige Schicht (10) in dem ersten Bereich (11) derart strukturiert ist, dass die elektrisch leitfähige Schicht (10) in dem ersten Bereich (11) mindestens einen druckabhängigen Widerstand (60) aufweist, **dadurch gekennzeichnet, dass**
die elektrisch leitfähige Schicht (19) in dem ersten Bereich (11) und in dem zweiten Bereich (12) aus dem gleichen Material ausgebildet ist.

2. Sensorelement nach Anspruch 1,
wobei die elektrisch leitfähige Schicht (10) in dem zweiten Bereich (12) derart strukturiert ist, dass die elektrisch leitfähige Schicht (10) in dem zweiten Bereich (12) eine erste und eine zweite Kontaktfläche (30, 40) zur externen Kontaktierung des mindestens einen temperaturabhängigen Widerstands (20) aufweist.

3. Sensorelement nach Anspruch 2,
wobei die elektrisch leitfähige Schicht (10) in dem zweiten Bereich (12) derart strukturiert ist, dass der mindestens eine temperaturabhängige Widerstand (20) als eine Leiterbahn (50), die mit der ersten und der zweiten Kontaktfläche (30, 40) verbunden ist, ausgebildet ist.

4. Sensorelement nach Anspruch 3,
- wobei die Leiterbahn (50) des temperaturabhängigen Widerstands (20) zwischen der ersten und zweiten Kontaktfläche (30, 40) angeordnet ist,
- wobei die Breite der Leiterbahn (50) kleiner als die Breite und/oder die Länge der ersten und zweiten Kontaktfläche (30, 40) ist.

5. Sensorelement nach einem der Ansprüche 3 oder 4,
- wobei der mindestens eine temperaturabhängige Widerstand (20) einen ersten temperaturabhängigen Widerstand (21) und mindestens einen zweiten temperaturabhängigen Widerstand (22, 23, 24) umfasst,
- wobei der erste temperaturabhängige Widerstand (21) und der mindestens eine zweite temperaturabhängige Widerstand (22, 23, 24) eine unterschiedliche Breite und/oder Länge ihrer jeweiligen Leiterbahn (50) aufweisen.

6. Sensorelement nach einem der Ansprüche 1 bis 5,
wobei der erste und zweite Bereich (11, 12) der elektrisch leitfähigen Schicht (10) durch eine Isolationszone (70) elektrisch voneinander isoliert sind.

7. Sensorelement nach einem der Ansprüche 1 bis 6,
- wobei die elektrisch leitfähige Schicht (10) in dem ersten Bereich (11) derart strukturiert ist, dass die elektrisch leitfähige Schicht (10) in dem ersten Bereich (11) mehrere druckabhängige Widerstände (61, 62, 63, 64) aufweist,
- wobei die mehreren druckabhängigen Widerstände (61, 62, 63, 64) eine Widerstandsbrücke bilden.

8. Sensorelement nach Anspruch 7,
- wobei der erste Bereich (11) der elektrisch leitfähigen Schicht (10) in mehrere Segmente (81, 82, 83, 84) unterteilt ist,
- wobei jeweils zwei benachbarte Segmente (81, 82, 83, 84) durch einen der druckabhängigen Widerstände (61, 62, 63, 64) elektrisch miteinander verbunden sind,
- wobei die Fläche der Segmente (81, 82, 83, 84) größer als die Fläche der druckabhängigen Widerstände (61, 62, 63, 64) ist,
- wobei die druckabhängigen Widerstände (61, 62, 63, 64) jeweils als ein durch Unterbrechung des ersten Bereichs (11) der elektrisch leitfähigen Schicht (10) definierter Pfad (90) ausgebildet sind, durch den zwei benachbarte Segmente (81, 82, 83, 84) elektrisch verbunden sind.

9. Verfahren zur Herstellung eines Sensorelements zur Druck- und Temperaturmessung, umfassend:
- Bereitstellen eines Grundkörpers (100) mit einer Membran (110) und einer um die Membran (110) angeordneten Randzone (120), wobei die Membran (110) als eine druckempfindliche Zone des Grundkörpers (100) derart ausgebildet ist, dass die Membran (110) in Abhängigkeit von einem Druckunterschied zwischen der Oberseite (O110) und der Unterseite (U110) der Membran eine Verformung annimmt, und wobei die Randzone (120) als eine druckunempfindliche Zone des Grundkörpers (100) ausgebildet ist,
- Aufbringen einer elektrisch leitfähige Schicht (10) mit einem ersten Bereich (11) über der Membran (110) des Grundkörpers (100) und mit einem zweiten Bereich (12) über der Randzone (120) des Grundkörpers (100),
- Strukturieren der elektrisch leitfähige Schicht (10) in dem zweiten Bereich (12) derart, dass in dem zweiten Bereich (12) der elektrisch leitfähigen Schicht (10) mindestens ein temperaturabhängiger Widerstand (20) ausgebildet wird,
- Strukturieren der elektrisch leitfähige Schicht (10) in dem ersten Bereich (11) derart, dass die elektrisch leitfähige Schicht (10) in dem ersten Bereich (11) mindestens einen druckabhängigen Widerstand (60) aufweist, **dadurch gekennzeichnet, dass**
die elektrisch leitfähige Schicht (10) in dem ersten Bereich (11) und in dem zweiten Bereich (12) aus dem gleichen Material ausgebildet ist.

10. Verfahren nach Anspruch 9, umfassend:
Strukturieren der elektrisch leitfähigen Schicht (10) in dem zweiten Bereich (12) derart, dass die elektrisch leitfähige Schicht (10) in dem zweiten Bereich (12) eine erste und eine zweite Kontaktfläche (30, 40) zur externen Kontaktierung des mindestens einen temperaturabhängigen Widerstands (20) aufweist und der mindestens eine temperaturabhängige Widerstand (20) als eine Leiterbahn (50), die mit der ersten und der zweiten Kontaktfläche (30, 40) verbunden ist, ausgebildet ist.

11. Verfahren nach einem der Ansprüche 9 bis 10,
wobei das Strukturieren der elektrisch leitfähigen Schicht (10) in dem ersten und zweiten Bereich (11, 12) durch Laserschneiden erfolgt.

## Claims

1. Sensor element for measuring pressure and temperature, comprising:
- a main body (100) having a membrane (110) and an edge zone (120) that is arranged around the membrane (110),
- an electrically conductive layer (10), having a first region (11) that is arranged over the membrane (110) of the main body (100), and a second region (12) that is arranged over the edge zone (120) of the main body (100),
- wherein the membrane (110) is configured as a pressure-sensitive zone of the main body (100) such that the membrane (110) undergoes deformation as a function of a pressure difference between the upper side (O110) and the underside (U110) of the membrane (110),
- wherein the edge zone (120) is configured as a pressure-insensitive zone of the main body (100),
- wherein the electrically conductive layer (10) in the second region (12) is structured such that, in the second region (12) of the electrically conductive layer, at least one temperature-dependent resistor (20) is formed, wherein the electrically conductive layer (10) in the first region (11) is structured such that the electrically conductive layer (10), in the first region (11), comprises at least one pressure-dependent resistor (60), **characterized in that**
the electrically conductive layer (19), in the first region (11) and in the second region (12), is formed of the same material.

2. Sensor element according to Claim 1,
wherein the electrically conductive layer (10) in the second region (12) is structured such that the electrically conductive layer (10), in the second region (12), comprises a first and a second contact surface (30, 40) for the external contact-connection of the at least one temperature-dependent resistor (20).

3. Sensor element according to Claim 2,
wherein the electrically conductive layer (10) in the second region (12) is structured such that the at least one temperature-dependent resistor (20) is in the form of a printed conductor (50), which is connected to the first and the second contact surface (30, 40).

4. Sensor element according to Claim 3,
- wherein the printed conductor (50) of the temperature-dependent resistor (20) is arranged between the first and the second contact surface (30, 40),
- wherein the width of the printed conductor (50) is smaller than the width and/or the length of the first and the second contact surface (30, 40).

5. Sensor element according to either of Claims 3 and 4,
- wherein the at least one temperature-dependent resistor (20) comprises a first temperature-dependent resistor (21) and at least one second temperature-dependent resistor (22, 23, 24),
- wherein the first temperature-dependent resistor (21) and the at least one second temperature-dependent resistor (22, 23, 24) have a different width and/or length of their respective printed conductor (50).

6. Sensor element according to one of Claims 1 to 5,
wherein the first and the second region (11, 12) of the electrically conductive layer (10) are electrically insulated from one another by means of an insulating zone (70) .

7. Sensor element according to one of Claims 1 to 6,
- wherein the electrically conductive layer (10) in the first region (11) is structured such that the electrically conductive layer (10), in the first region (11), comprises a plurality of pressure-dependent resistors (61, 62, 63, 64),
- wherein the plurality of pressure-dependent resistors (61, 62, 63, 64) form a resistor bridge.

8. Sensor element according to Claim 7,
- wherein the first region (11) of the electrically conductive layer (10) is subdivided into a plurality of segments (81, 82, 83, 84),
- wherein in each case two adjoining segments (81, 82, 83, 84) are electrically connected to one another by means of one of the pressure-dependent resistors (61, 62, 63, 64),
- wherein the surface area of the segments (81, 82, 83, 84) is greater than the surface area of the pressure-dependent resistors (61, 62, 63, 64),
- wherein the pressure-dependent resistors (61, 62, 63, 64) are in each case formed as a path (90) that is defined by the interruption of the first region (11) of the electrically conductive layer (10), by means of which two adjoining segments (81, 82, 83, 84) are electrically connected.

9. Method for producing a sensor element for measuring pressure and temperature, comprising:
- provision of a main body (100) having a membrane (110) and an edge zone (120) that is arranged around the membrane (110), wherein the membrane (110) is configured as a pressure-sensitive zone of the main body (100) such that the membrane (110) undergoes a deformation as a function of a pressure difference between the upper side (O110) and the underside (U110) of the membrane, and wherein the edge zone (120) is configured as a pressure-insensitive zone of the main body (100),
- application of an electrically conductive layer (10), having a first region (11) over the membrane (110) of the main body (100) and having a second region (12) over the edge zone (120) of the main body (100),
- structuring of the electrically conductive layer (10) in the second region (12) such that at least one temperature-dependent resistor (20) is formed in the second region (12) of the electrically conductive layer (10),
- structuring of the electrically conductive layer (10) in the first region (11) such that the electrically conductive layer (10), in the first region (11), comprises at least one pressure-dependent resistor (60), **characterized in that**
the electrically conductive layer (10), in the first region (11) and in the second region (12), is formed of the same material.

10. Method according to Claim 9, comprising:
structuring of the electrically conductive layer (10) in the second region (12) such that the electrically conductive layer (10), in the second region (12), comprises a first and a second contact surface (30, 40) for the external contact-connection of the at least one temperature-dependent resistor (20), and the at least one temperature-dependent resistor (20) is in the form of a printed conductor (50), which is connected to the first and the second contact surface (30, 40).

11. Method according to either of Claims 9 and 10, wherein the structuring of the electrically conductive layer (10) in the first and the second region (11, 12) is effected by laser cutting.

## Revendications

1. Élément capteur pour la mesure de la pression et de la température, comprenant :
- un corps de base (100) pourvu d'une membrane (100) et d'une zone de bordure (120) disposée autour de la membrane (100),
- une couche électriquement conductrice (10), qui possède une première région (11), laquelle est disposée au-dessus de la membrane (110) du corps de base (100), et une deuxième région (12), laquelle est disposée au-dessus de la zone de bordure (120) du corps de base (100),
- la membrane (110) étant réalisée sous la forme d'une zone sensible à la pression du corps de base (100), de telle sorte que la membrane (110) adopte une déformation en fonction d'une différence de pression entre le côté supérieur (O110) et le côté inférieur (U110) de la membrane (110),
- la zone de bordure (120) étant réalisée sous la forme d'une zone insensible à la pression du corps de base (100),
- la couche électriquement conductrice (10) étant structurée dans la deuxième région (12) de telle sorte qu'au moins une résistance dépendante de la température (20) est formée dans la deuxième région (12) de la couche électriquement conductrice,
la couche électriquement conductrice (10) étant structurée dans la première région (11) de telle sorte que la couche électriquement conductrice (10) présente dans la première région (11) au moins une résistance dépendante de la pression (60),
**caractérisé en ce que** la couche électriquement conductrice (19) est formée du même matériau dans la première région (11) et dans la deuxième région (12).

2. Élément capteur selon la revendication 1, la couche électriquement conductrice (10) étant structurée dans la deuxième région (12) de telle sorte que la couche électriquement conductrice (10) possède, dans la deuxième région (12), une première et une deuxième surface de contact (30, 40) destinées à la mise en contact externe de l'au moins une résistance dépendante de la température (20) .

3. Élément capteur selon la revendication 2, la couche électriquement conductrice (10) étant structurée dans la deuxième région (12) de telle sorte que l'au moins une résistance dépendante de la température (20) est réalisée sous la forme d'une piste conductrice (50), laquelle est reliée à la première et à la deuxième surface de contact (30, 40).

4. Élément capteur selon la revendication 3,
- la piste conductrice (50) de la résistance dépendante de la température (20) étant disposée entre la première et la deuxième surface de contact (30, 40),
- la largeur de la piste conductrice (50) étant inférieure à la largeur et/ou la longueur de la première et de la deuxième surface de contact (30, 40).

5. Élément capteur selon l'une des revendications 3 ou 4
- l'au moins une résistance dépendante de la température (20) comportant une première résistance dépendante de la température (21) et au moins une deuxième résistance dépendante de la température (22, 23, 24),
- la première résistance dépendante de la température (21) et l'au moins une deuxième résistance dépendante de la température (22, 23, 24) présentant une largeur et/ou une longueur différente de leur piste conductrice (50) respective.

6. Élément capteur selon l'une des revendications 1 à 5, la première et la deuxième région (11, 12) de la couche électriquement conductrice (10) étant isolées électriquement l'une de l'autre par une zone d'isolation (70) .

7. Élément capteur selon l'une des revendications 1 à 6,
- la couche électriquement conductrice (10) étant structurée dans la première région (11) de telle sorte que la couche électriquement conductrice (10) présente dans la première région (11) plusieurs résistances dépendantes de la pression (61, 62, 63, 64),
- les plusieurs résistances dépendantes de la pression (61, 62, 63, 64) formant un pont résistif.

8. Élément capteur selon la revendication 7,
- la première région (11) de la couche électriquement conductrice (10) étant subdivisée en plusieurs segments (81, 82, 83, 84),
- deux segments (81, 82, 83, 84) voisins étant respectivement reliés électriquement l'un à l'autre par l'une des résistances dépendantes de la pression (61, 62, 63, 64),
- la surface des segments (81, 82, 83, 84) étant plus grande que la surface des résistances dépendantes de la pression (61, 62, 63, 64),
- les résistances dépendantes de la pression (61, 62, 63, 64) étant respectivement réalisées sous la forme d'une voie définie par l'interruption de la première région (11) de la couche électriquement conductrice (10), par laquelle les deux segments (81, 82, 83, 84) voisins sont reliés électriquement.

9. Procédé de fabrication d'un élément capteur pour la mesure de la pression et de la température, comprenant :
- fourniture d'un corps de base (100) pourvu d'une membrane (100) et d'une zone de bordure (120) disposée autour de la membrane (100), la membrane (110) étant réalisée sous la forme d'une zone sensible à la pression du corps de base (100), de telle sorte que la membrane (110) adopte une déformation en fonction d'une différence de pression entre le côté supérieur (O110) et le côté inférieur (U110) de la membrane (110), et la zone de bordure (120) étant réalisée sous la forme d'une zone insensible à la pression du corps de base (100),
- application d'une couche électriquement conductrice (10), comprenant une première région (11) au-dessus de la membrane (110) du corps de base (100), et comprenant une deuxième région (12) au-dessus de la zone de bordure (120) du corps de base (100),
- structuration de la couche électriquement conductrice (10) dans la deuxième région (12) de telle sorte qu'au moins une résistance dépendante de la température (20) est formée dans la deuxième région (12) de la couche électriquement conductrice (10),
- structuration de la couche électriquement conductrice (10) dans la première région (11) de telle sorte que la couche électriquement conductrice (10) présente dans la première région (11) au moins une résistance dépendante de la pression (60),
**caractérisé en ce que** la couche électriquement conductrice (10) est formée du même matériau dans la première région (11) et dans la deuxième région (12).

10. Procédé selon la revendication 9, comprenant :
structuration de la couche électriquement conductrice (10) dans la deuxième région (12) de telle sorte que la couche électriquement conductrice (10) possède, dans la deuxième région (12), une première et une deuxième surface de contact (30, 40) destinées à la mise en contact externe de l'au moins une résistance dépendante de la température (20) et l'au moins une résistance dépendante de la température (20) est réalisée sous la forme d'une piste conductrice (50), laquelle est reliée à la première et à la deuxième surface de contact (30, 40).

11. Procédé selon l'une des revendications 9 à 10, la structuration de la couche électriquement conductrice (10) dans la première et la deuxième région (11, 12) s'effectuant par découpe au laser.
